(19) Europäisches Patentamt
European Patent Office
Office européen des brevets

(11) Veröffentlichungsnummer : **0 046 146**
**B1**

(12) # EUROPÄISCHE PATENTSCHRIFT

(45) Veröffentlichungstag der Patentschrift : **26.06.85**

(51) Int. Cl.[4] : **C 21 B 13/04**

(21) Anmeldenummer : **81890133.2**

(22) Anmeldetag : **29.07.81**

(54) **Verwendung eines Muffelofens zur Entzinkung von oxydischen zinkhaltigen Eisenträgern.**

(30) Priorität : **08.08.80 AT 4102/80**

(43) Veröffentlichungstag der Anmeldung : **17.02.82 Patentblatt 82/07**

(45) Bekanntmachung des Hinweises auf die Patenterteilung : **26.06.85 Patentblatt 85/26**

(84) Benannte Vertragsstaaten :
**BE DE FR GB IT SE**

(56) Entgegenhaltungen :
**DE-C- 140 554**
**DE-C- 899 556**
**DE-C- 1 076 156**
**FR-A- 2 436 822**
**US-A- 1 759 173**
**US-A- 1 967 274**
**Chemische Technologie, Bd. 6, 1973, S. 314/315**
**Physikalische Chemie der Eisen- und Stahlerzeugung, 1966, S. 117**

(73) Patentinhaber : **VOEST-ALPINE Aktiengesellschaft**
**Friedrichstrasse 4**
**A-1011 Wien (AT)**

(72) Erfinder : **Stift, Kurt, Dipl. Ing.**
**Parkstrasse 16**
**A-8700 Leoben (AT)**

(74) Vertreter : **Kretschmer, Adolf, Dipl.-Ing.**
**Schottengasse 3a**
**A-1014 Wien (AT)**

**EP 0 046 146 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung bezieht sich auf eine Verwendung eines Muffelofens zur Entzinkung von oxydischen zinkhältigen Eisenträgern, wie zum Beispiel Eisenerzen, Hüttenabfällen, insbesondere Hüttenstäuben, wobei der Eisenträger in stückiger Form mit einer Mindestkorngröße von 5 mm zusammen mit stückigen Reduktionsmitteln dem von außen beheizten Muffelofen aufgegeben wird und die Beschickung eine Vorwärm- und Vorreduktionszone sowie eine Reaktionszone zwischen dem Aufgabeende und dem Austragsende des Muffelofens durchläuft, wobei der Muffelofen an seinem Aufgabe- und seinem Austragsende gasdicht abschließbar ausgebildet ist, die Wandung des Muffelofens in einem zwischen diesen beiden Enden liegenden Bereich Gasaustrittsöffnungen aufweist, welche unter Umgehung oder Durchsetzung von am Muffelofen außen angebrachten Heizeinrichtungen münden, die Heizeinrichtung von wenigstens zwei den Muffelofen außen umgebenden, in Achsrichtung des Muffelofens aufeinanderfolgenden Brennkammern gebildet ist und an die Gasaustrittsöffnungen des Muffelofens zwischen benachbarten Brennkammern angeordnete Leitungen angeschlossen sind und die Querschnittsebene, an welche die Gasaustrittsöffnungen anschließen, an eine Zone des Muffelofens angeschlossen ist, welche im Betrieb eine Temperatur von über 650 °C, vorzugsweise von 700 bis 900 °C, aufweist. Eine derartige Verwendung ermöglicht es, durch Direktreduktion gleichzeitig Eisenschwamm herzustellen.

Die der erfindungsgemäßen Verwendung zugrundeliegende Aufgabe resultiert aus der Tatsache, daß zinkhältige Eisenträger eine Reihe von Störungen des Hochofenganges mit sich bringen, wobei das Zink vor allen Dingen unerwünschte Ansätze am Mauerwerk des Ofens ausbildet oder in das Mauerwerk eindringt. Neben den zerstörenden Wirkungen auf das Ofenmauerwerk und der Erschwerung des Ofenganges hat Zink auch einen ungünstigen Einfluß auf den Hochofengang. Das Roheisen wird durch niedergehende Zinkansätze abgekühlt und die Schlacke zäherflüssig. Die schädlichen Einflüsse sind mit einer Erhöhung des Koksverbrauches verbunden. Heißes Arbeiten bei hoher Gichtgastemperatur befünstigt die Entfernung des Zinks aus dem Ofen mit dem Gas und dem Staub. Mit der bisher üblichen Verhaldung dieser Stäube gehen neben den Nichteisenmetallen erhebliche Eisenmengen verloren. Da die Mitverarbeitung verzinkten Schrotts in den Stahlwerken weiterhin ansteigen wird, ist auch vom Einsatz für die Stahlerzeugung keine Erleichterung zu erwarten.

Es ist bereits bekannt, Zink in Drehrohröfen reduzierend zu verflüchtigen, wobei der verbleibende, das Eisen überwiegend in metallischer Form enthaltende Rückstand in die Roheisen- bzw. Stahlerzeugung rückgeführt werden kann. Diese sogenannten Wälzverfahren sind aber erst ab etwa 150.000 Jahrestonnen stückig gemachter Hüttenstäube wirtschaftlich.

Aus der DE-C 1 076 156 ist ein Verfahren bekannt geworden, mit welchem auf die Nutzbarmachung von feinem und daher nichtagglomerierbarem zinkhältigem Hochofenfilterstauf abgezielt wird, wobei ein hochzinkhältiger Staub gewonnen werden kann. Als Reaktionsprodukt entsteht hiebei ein hocheisenhältiges zinkfreies Produkt, das anschließend auf Roheisen verhüttet werden kann.

Die gleichzeitige Berücksichtigung der für die Erzreduktion erforderlichen Bedingungen zusätzlich zu den für die Abtrennung von Zink erforderlichen Reaktionsbedingungen stellt das wesentliche Merkmal der vorliegenden Erfindung dar. Im Rahmen der erdindungsgemäßen Verwendung eines Muffelofens erfolgt in einer ersten Zone die Vorwärmung und Vorreduktion von $Fe_2O_3$ sowie $Fe_3O_4$ (Hämatit, Magnetit, etc.) zu FeO (Wüstit). Die Erwärmung soll in dieser Vorwärmzone und Vorreduktionszone möglichst rasch erfolgen, um störende Nebenwirkungen des stückigen Reduktionsmittels zu vermeiden. In der nachfolgenden Reaktionszone wird nun das gebildete FeO durch das Reduktionsmittel zu metallischem Eisen reduziert. Ebenso reagieren die Zinkoxyde der Beschickung mit dem Reduktionsmittel zu metallischem Zink nach der nachfolgenden Reaktionsgleichung.

$$ZnO + C = Zn + CO$$

Die Temperaturen in dieser Reaktionszone steigen auf 900 bis 1 100 °C an, wodurch das gebildete metallische Zink flüchtig wird. Wenn nun das metallische Zink in Zonen mit einer Temperatur unter dem Siedepunkt des Zinks im Muffelofen gelangt, kondensiert Zink wieder und es besteht sogar die Gefahr, daß Zink mit $CO_2$ nach der folgenden Gleichung

$$Zn + CO_2 = ZnO + CO$$

wiederum zu Zinkoxyd oxydiert wird. Eine derartige Rückoxydation könnte in kühleren Zonen des Muffelofens, beispielsweise bei Temperaturen von etwa 500 °C, ohne weiteres wieder eintreten. Um nun Zink aus dem auszubringenden reduzierten Material zu entfernen, wird erfindungsgemäß der Muffelofen an seinen beiden Enden gasdicht abgeschlossen. Die Reaktionsgase, welche im Inneren des Ofens einen Überdruck erzeugen, werden nun aus einer Querschnittsebene des Muffelofens zwischen dem oberen und unteren Ende abgeführt, wodurch das Zink als Gas abgeführt werden kann. Die Querschnittsebene, aus welcher die Reaktionsgase abgeführt werden, muß nun in einem bestimmten Abstand vom Aufgabeende des Muffelofens angeordnet sein, da am Aufgabeende des Muffelofens eine Kondensation des gasförmigen Zinks unvermeidlich wäre. Es soll aber auch die Gefahr einer Rückoxydation des Zinks

in kühleren Muffelofenzonen vermieden werden und es wird daher vorgeschlagen, die Reaktionsgase vorzugsweise am oberen Ende der Reaktionszone abzuführen. Auf diese Weise ergeben sich Vorteile in bezug auf die Energiebilanz des Verfahrens, da die Reaktionsgase mit ihrer fühlbaren Wärme über eine möglichst lange Schichthöhe der Beschickung auf die Beschickung einwirken können. So durchströmen beispielsweise die heißesten Reaktionsgase am unteren Ende des Muffelofens die gesamte Reaktionszone im Gegenstrom und verbessern die Umsetzung zu metallischem Eisen. Die Reaktionsgase werden nun bevorzugt über die Brennkammer umgehende oder durchsetzende Leitungen abgeführt, so daß eine einfache Abtrennung des in diesen Reaktionsgasen mitgeführten Zinks möglich wird. Hiezu genügt es, beispielsweise die Reaktionsgase kurzfristig unter den Siedepunkt des Zinks abzukühlen, um das Kondensat abzutrennen. Unter Umständen lassen sich auch Alkalien auf diese Art abscheiden.

Um eine Kondensation des Zinks im Muffelofen gering zu halten und vor allen Dingen die Gefahr einer Rückoxydation zu Zinkoxyden zu vermeiden, werden vorzugsweise die Reaktionsgase aus einer Zone des Muffelofens abgeführt, welche eine Temperatur von über 650 °C, vorzugsweise von 700 bis 900 °C, aufweist. Die Gastemperaturen in diesen Zonen können ohne weiteres über den angegebenen Temperaturen für das Einsatzmaterial in diesen Zonen liegen. Bei Temperaturen von über 650 °C beträgt der Dampfdruck von Zink bereits mehr als 0,1 bar und eine Abführung von Zink in der Dampfphase ist somit bereits ab diesen Temperaturen ohne weiteres möglich. Die Temperatur der Reaktionsgase soll vorzugsweise 906 °C überschreiten. Bei dieser Temperatur ist eine vollständige Verdampfung von Zink sichergestellt.

Vorzugsweise erfolgt die Verwendung des Muffelofens so, daß die Querschnittsebene, in welcher die Reaktionsgase abgezogen werden, in einem Abstand vom Aufgabeende des Muffelofens angeordnet wird, in welchem die vollständige Umwandlung von $Fe_2O_3$ und $Fe_3O_4$ zu FeO sichergestellt ist. Nach der Umwandlung zu FeO ist das Sauerstoffangebot in der Beschickung bereits so weit reduziert, daß eine Rückoxydation des Zinks zu Zinkoxyd bei den herrschenden Temperaturen in keiner Weise befürchtet werden muß. Die Reaktionsgase können ohne weiteres auch aus tiefer gelegenen Querschnittsebenen innerhalb der Reaktionszone abgeführt werden, jedoch bringt eine Verschiebung der Austragsebene in Richtung zum Austragsende des Muffelofens Nachteile in bezug auf den Energieverbrauch mit sich. Es würden nämlich die Reaktionsgase mit zunehmendem Abstand vom Aufgabeende des Muffelofens mit höheren Temperaturen ausgebracht und die Zeit, über welche die heißen Reaktionsgase auf die Beschickung einwirken können, würde durch eine derartige Verlagerung der Ebene des Ausbringens der Reaktionsgase verkürzt werden.

Für die Energiebilanz der vorgeschlagenen Verwendung des Muffelofens ist es vorteilhaft, die Vorwärmung und Vorreduktion rasch vorzunehmen und hierauf die Temperatur in der nachfolgenden Reaktionszone im wesentlichen konstant zu halten. Eine besonders geeignete Querschnittsebene für das Ausbringen der Reaktionsgase ergibt sich in diesem Fall dann, wenn die Reaktionsgase aus einer Querschnittsebene des Muffelofens abgeführt werden, in welcher der Temperaturunterschied zwischen dieser Querschnittsebene und einer in Strömungsrichtung der Beschickung benachbarten Querschnittsebene geringer ist als zwischen unmittelbar vorangehenden äquidistanten Querschnittsebenen. Da weder die absolute Länge der Vorwärm- und Vorreduktionszone noch die absolute Länge der Reaktionszone für alle Beschickungen gleich ist, stellt das Kriterium eine Knickes im Temperaturverlauf über die axiale Länge des Muffelofens ein gutes Auswahlkriterium für die Wahl der Querschnittsebene dar, aus welcher die Reaktionsgase in besonders vorteilhafter Weise ausgebracht werden können.

Bei der üblichen Verfahrensführung, wie sie beispielsweise aus Direktreduktionsverfahren für die Gewinnung von Eisenschwamm bekannt ist, werden die Eisenschwammteilchen mit Temperaturen von etwa 900-1 050 °C aus dem Muffelofen zusammen mit Schlacke ausgebracht, worauf in bekannter Weise eine Trennung der Schlacke von den Eisenschwammteilchen, beispielsweise durch Magnetscheider, erfolgen kann.

Die erfindungsgemäße Verwendung des Muffelofens setzt einen Muffelofen voraus, welcher vorzugsweise aus Siliziumkarbidsteinen gefertigt ist und welcher an seinem Aufgabe- und seinem Austragsende gasdicht abschließbar ausgebildet ist, wobei die Wandung des Muffelofens in einem zwischen diesen beiden Enden liegenden Bereich Gasaustrittsöffnungen aufweist, welche unter Umgehung oder Durchsetzung der am Muffelofen außen angebrachten Heizeinrichtungen münden. Der gasdichte Abschluß des Aufgabeendes kann beispielsweise durch einen konventionellen Doppelglockengichtverschluß erzielt werden. An das Austragsende des Muffelofens schließt üblicherweise eine gekühlte Fördereinrichtung, beispielsweise eine wassergekühlte Förderschnecke, an, wobei der gasdichte Abschluß durch eine Doppelschleuse mit Schiebern erzielt werden kann.

Muffelöfen der erfindungsgemäß zu verwendenden Art zeichnen sich gegenüber Drehrohröfen durch eine exakte Trennung der reduzierenden Ofenatmosphäre von der oxydierenden Atmosphäre für die Energiezufuhr aus. Der Muffelofen kann selbstverständlich auch elektrisch beheizt werden, jedoch wird üblicherweise eine Außenbeheizung durch Brenner vorgesehen. Die erfindungsgemäße Verwendung ist gegenüber den bekannten Maßnahmen vorzugsweise dahingehend modifiziert, daß die Heizeinrichtung von wenigstens zwei den Muffelofen außen umgebenden, in Achsrichtung des Muffelofens aufeinanderfolgenden Brennkammern gebildet ist und daß an die Gasaustrittsöffnungen des Muffelofens zwischen benachbarten Brennkammern angeordnete Leitungen angeschlossen sind. Wenn die Heizeinrichtung in Kammern unterteilt wird, ist auch zwischen den Heizkammern eine hinreichend hohe

Temperatur sichergestellt, welche eine sofortige Kondensation des ausgebrachten Zinks verhindert. Die Leitungen werden aber zwischen den Brennkammern nicht der oxydierenden Atmosphäre der Brennkammern selbst ausgesetzt und sind daher gegen Korrosion beständiger. Die Leitungen können von den Gasaustrittsöffnungen ausgehend abwärts geneigt sein, um ein Wiedereindringen von gegebenenfalls kondensierendem Zink in den Muffelofen zu verhindern. Die erfindungsgemäße Verwendung erfolgt vorzugsweise mit einem Muffelofen, bei welchem die dem Aufgabeende benachbarte Brennkammer sich im wesentlichen über die axiale Länge der Vorwärm- und Vorreduktionszone und vorzugsweise über etwa ein Drittel der axialen Länge des Muffelofens erstreckt. Diese erste Brennkammer kann für die gewünschte rasche Aufwärmung mit einer größeren Anzahl von Brennern versehen werden, welche vorzugsweise in in Strömungsrichtung der Beschickung aufeinanderfolgenden Ebenen angeordnet sind. Der Abstand dieser Brennerebenen kann in dieser ersten Brennkammer geringer gewählt werden als in der nachfolgenden, die Reaktionszone umgebenden Brennkammer, in welcher nur mehr die erreichte Temperatur aufrecht erhalten werden soll. Zur Verbesserung der Energiebilanz können die Abgase aus der die Reaktionszone umgebenden Brennkammer der die Vorwärm- und Vorreduktionszone umgebenden Brennkammer über Leitungen zugeführt werden. Wenn sich die erste Brennkammer über die gesamte Vorwärm- und Vorreduktionszone erstreckt, werden die Gasdruchtrittsöffnungen unmittelbar unterhalb dieser ersten Kammer über den Umfang des Muffelofens verteilt vorgesehen. Die Gasaustrittsöffnungen können hiebei in den Muffelofen umschließende Ringkammern münden, deren Kammerboden vorzugsweise nach außen abwärts geneigt ist. Die Neigung des Bodens der Ringkammern gewährleistet ein Abfließen von kondensierendem Zink nach außen. Der Muffelofen kann in vorteilhafter Weise im Bereich der Gasaustrittsöffnungen mit feuerfesten zinkbeständigen Steinen ausgekleidet sein, wobei vorzugsweise die Gasaustrittsöffnungen in einem Abstand von 30 bis 50 % der axialen Länge des Muffelofens, gemessen vom Aufgabeende des Muffelofens angeordnet, sind. Eine derartige Bemessung liegt erfahrungsgemäß im optimalen Bereich für das Ausbringen der Reaktionsgase.

Die Abtrennung des in den Reaktionsgasen mitgeführten Zinks kann in einfacher Weise dadurch erfolgen, daß die Gasaustrittsöffnungen über Leitungen mit einer Reinigungseinrichtung, insbesondere einer Kühleinrichtung zum Kondensieren von gasförmigem Zink verbunden ist.

Zur Verbesserung der Energiebilanz kann eine Rückführung der heißen Reaktionsgase nach der Reinigung zu einer Brennkammer vorgesehen sein. Die Reaktionsgase können in diesen Brennkammern restlos verbrannt werden und treten in diese Brennkammern noch mit einem erheblichen Teil ihrer ursprünglichen Wärme ein.

Muffelöfen für die Direktreduktion sind gemäß dem Stand der Technik sich konisch vom Aufgabeende zum Austragsende erweiternd ausgebildet. Erfindungsgemäß wird nun vorgeschlagen, diese Erweiterung nur im Bereich der Vorwärm- und Vorreduktionszone vorzusehen, um in diesem Bereich eine Kompression und damit eine Verringerung der Porosität und der Gasdurchlässigkeit zu vermeiden. An diesen sich konisch erweiternden Teil wird nun erfindungsgemäß ein Teil mit gleichbleibendem Querschnitt angeschlossen. Durch diese Ausbildung kann die Konizität in dem kritischen Bereich der raschen Aufwärmung wesentlich größer gewählt werden, ohne daß der Gesamtdurchmesser der Muffelöfen im Bereich der Reaktionszone unerwünscht große Abmessungen annimmt. Ein zu großer Durchmesser würde nämlich den Wärmeübergang von den Brennkammern zur Mitte der niedergehenden Beschickung beeinträchtigen ; anderseits hat eine zu geringe Konizität, wie sie bei durchgehend konisch sich erweiternden Muffelöfen häufig anzutreffen ist, immer noch die Gefahr zur Folge, daß ein Verkleben und Komprimieren der Beschickung und damit eine Verringerung der Porosität und Verschlechterung des Ausbringens eintritt.

Die Erfindung wird nachfolgend an Hand von in der Zeichnung dargestellten Ausführungsbeispielen einer erfindungsgemäß zu verwendenden Vorrichtung näher erläutert.

In dieser zeigen Fig. 1 eine schematische Darstellung eines erfindungsgemäßen schachtartigen Muffelofens, Fig. 2 eine abgeänderte Ausbildung der Brennkammern bei einer Ausbildung nach Fig. 1 und Fig. 3 eine weitere Ausführungsform des erfindungsgemäßen schachtförmigen Muffelofens.

In Fig. 1 ist ein zylindrischer oder prismatischer schachtförmiger Muffelofen 1 dargestellt, welcher zwei Brennkammern 2 und 3 aufweist. Die Brennkammer 2 umgibt hiebei die Vorwärm- und Vorreduktionszone 4, wogegen die Brennkammer 3 die eigentliche Reaktionszone 5 umgibt. Der schachtförmige Muffelofen ist über einen Doppelglockengichtgasverschluß 6 aufgabeseitig und über eine Doppelschleuse 7 mit Schiebern 8 und 9 austragsseitig gasdicht abschließbar. Zwischen den Brennkammern 2 und 3 sind über den Umfang des Muffelofens 1 verteilt Austragsöffnungen 10 vorgesehen, welche über Leitungen 11 und 12 mit einer Gasreinigung 13 verbunden sind. Die über die Gasdurchtrittsöffnungen 10 ausgebrachten Reaktionsgase werden in der Reinigungsstufe 13 unter den Siedepunkt des Zinks abgekühlt, wodurch das metallische Zink ebenso wie der bei der Gasreinigung anfallende Staub über die Austragsöffnung 14 aus der Reinigungsstufe 13 ausgebracht werden kann. Die heißen Reaktionsgase werden aus der Reinigungsstufe über eine Leitung 15 der Brennkammer 2 und/oder 3 rückgeführt und dienen dort der Vorerwärmung der Beschickung bzw. Beheizung der Reaktionszone. Am unteren Ende 16 des Muffelofens 1 ist eine Wasserkühlung 17 vorgesehen. Die niedergehende Beschickung wird über eine wassergekühle Schnecke 18 abgefördert und zur Doppelschleuse 7 gefördert.

Den Brennkammern 2 und 3 wird über Leitungen 19 und 20 Brenngas zugeführt. Als Brenngas kann beispilesweise Erdgas, Methan und/oder Gichtgas in beliebigen Mischungsverhältnissen eingesetzt

werden. Die Abgase werden über Leitungen 21, 22 aus den jeweiligen Kammern ausgetragen. Den Brennkammern 2, 3 wird zusätzlich noch Verbrennungsluft über Leitungen 23 und 24 zugeführt. Die heißen Verbrennungsgase der unteren Brennkammer 3 können über eine Leitung 25 in die obere Brennkammer 2 zugesetzt werden oder aber unter Zwischenschaltung eines Wärmetauschers zum Aufwärmen der Verbrennungsluft herangezogen werden. Bei der Darstellung nach Fig. 2 sind die Bezugszeichen der Fig. 1 für gleiche Bauteile beibehalten worden. Die obere Brennkammer 2, welche die Vorwärm- und Vorreduktionszone 4 umgibt, weist eine Reihe von in verschiedenen Ebenen angeordneten Brennern 26 auf, deren Abstand voneinander in Strömungsrichtung 27 der Beschickung größer wird. In der die Reaktionszone 5 umgebenden Brennkammer 3 ist nur mehr eine geringere Anzahl von Brennern 26 erforderlich, da in diesem Bereich des Muffelofens eine weitere Temperaturerhöhung nicht mehr erforderlich ist, sondern lediglich die eingestellte Temperatur gehalten werden soll. Die Gasaustrittsöffnungen 10 liegen in einer Querschnittsebene 28, welche unterhalb der Teufe und zwischen den beiden Zonen 4 und 5 des Muffelofens liegt.

Als Brenngas kann dem Brenner beispielsweise Methan zugeführt werden.

Bei der Ausbildung nach Fig. 3 verlaufen die Wände 29 des Muffelofens im Bereich der Vorwärm- und Vorreduktionszone 4 von der Aufgabestelle ausgehend divergierend und schließen an zueinander parallele Wände 30 im Bereich der Reaktionszone 5 an. Die Gasaustrittsöffnungen 10 liegen in der Querschnittsebene 28, in welcher die divergierenden Wände 29 in die parallelen Wänder 30 übergehen. Die mit der Darstellung in den Fig. 1 und 2 übereinstimmenden Bauteile wurden wiederum mit gleichen Bezugszeichen versehen.

Das erfindungsgemäße Verfahren läuft in den beschriebenen Einrichtungen wie folgt ab.

Zinkhältiger Hüttenstaub oder Zinkkonzentrate werden in üblicher Art und Weise (Pelletieren, Brikettieren, Kneten) stückig gemacht. Sofern der Staub oder das Konzentrat nicht gewisse hydraulische Eigenschaften mitbringt, die ein Stückigmachen und Aushärten ohne zusätzliche Bindemittel gestatten, dienen als Binder übliche Zusätze, wie Pech, Sulfidlaugenrückstände, Bitumen, Bentonit etc. Das stückiggemachte zinkhältige Gut oder Konzentrat muß nach erfolgter Härtung eine für den Prozeßablauf ausreichende mechanische Festigkeit und Porosität aufweisen. Zur Gewährleistung eines innigen Kontaktes von Reduktionsmittel zum abzubauenden Sauerstoff aus den Metalloxyden kann dem zinkhältigen Ausgangsmaterial Kohlenstoff in Form von Kohle, Petrolkoks etc. vor deren Stückigmachung und/oder nach deren Stückigmachung eingebunden bzw. zugemengt werden. Der Reduktionsmittelbedarf richtet sich nach der Menge des abzubauenden Sauerstoffes und wird zu diesen überstöchiometrisch berechnet auf ca. 1,2-fache Sauerstoffmenge, eingebracht. Das stückggemachte Gut wird durch eine externe Wärmebehandlung vorgetrocknet. Diese Trocknung erfolgt unter Temperaturen, bei der der eingebundene Kohlenstoff noch nicht verbrennt (vorzugsweise unter 450 °C). Im Anschluß daran wird das Stückgut zusammen mit eventuell schwefelaufnehmenden Zusätzen, wie Kalk, in den stehenden Muffelofen 1 chargiert.

Im oberen Teil des Muffelofens erfolgt die vollständige Trocknung, die Entfernung eventuell flüchtiger Bestandteile aus dem Einsatzmaterial sowie die weitgehende Härtung des zinkhältigen Einsatzgutes.

Die Zufuhr der Wärme erfolgt durch die außenliegenden Brennkammern 2, 3. Die in verschiedenen Höhen angeordneten Brenner 26 gewährleisten die Einstellung eines für den Prozeßablauf optimalen Temperaturprofiles. Die Absinkgeschwindigkeit ist durch entsprechende Gefäßprofilausbildung (konischen) an die Beschickung und den Prozeßablauf angepaßt. Der Einsatz sinkt kontinuierlich ab, durchwandert die Querschnittsebene 28, aus der die zinkhältigen Gase aus dem Ofen über eine Ringleitung abgezogen werden. Zink verdampft bei 906 °C. Um ein Kondensieren von Zink in den Absaugleitungen sowie an der niedergehenden Beschickung zu vermeiden, sollen diese Temperaturen über dem Verdampfungspunkt von Zink liegen. Die Gase rühren aus der Reaktion des oxydischen Sauerstoffes mit dem Reduktionskohlenstoff sowie aus der Reaktion von in Kohlen enthaltenen flüchtigen Bestandteilen mit den Beschickungskomponenten her.

Der Schacht ist nach oben z. B. durch den Doppelglockengichtverschluß 6 abgedichtet bzw. chargierbar.

Durch das Absaugen der zinkhältigen Gase aus der unterhalb der Teufe liegenden Ebene 28 kann die Beschickungsoberflächentemperatur derart eingestellt werden, daß das grüne Einsatzgut keinen Thermoschock erleidet. Durch diese Maßnahme wird zusätzlich der Gichtgasverschluß 6 keinen hohen Temperaturen ausgesetzt.

Die heißen abgesaugten zinkhältigen Gase, deren Temperatur vorzugsweise ca. 1050 °C betragen soll, werden in die Kondensationskammer 13 gebracht und rasch unter den Zinktaupunkt abgekühlt. Durch diese Maßnahme wird Zink, welches teils in metallischer und/oder oxidischer Form vorliegt, abgeschieden und kann einer Weiterverwertung zugeführt werden.

Das entzinkte Abgas wird zur Beheizung des Schachtes herangezogen, wodurch die ihm innewohnende chemisch gebundene ebenso wie die fühlbare Wärme wieder dem Prozeß zugeführt wird.

Im unter der Absaugzone liegenden außenbeheizten Ofenteil erfolgt die Weiterführung der bereits in dem über der Absaugzone liegenden Schachtteil eingeleiteten Reduktion des mit der Beschickung eingebrachten ZnO zu metallischen Zink sowie der Abbau des an das Eisen gebundenen Sauerstoffes. Der gebildete Eisenschwamm sowie das überschüssige Reduktionsmittel werden nach Durchlaufen der

Kühlstrecke 17 durch Magnetscheidung voneinander getrennt.

Im Inneren dieses Reduktionsteils laufen folgende Reaktionen ab :

| | | J/Formelumsatz in mol | |
|---|---|---|---|
| I | $ZnO + C = Zn + CO$ | + | 224 080 |
| II | $Fe_2O_3 + CO = 2 FeO + CO_2$ | - | 6 737 |
| III | $2 Fe_2O_3 + 3C = 4 Fe + 3CO_2$ | + | 462 360 |
| | $3 CO_2 + 3C = 6 CO$ | + | 517 400 |
| | $2 Fe_2O_3 + 6C = 4 Fe + 6CO$ | + | 979 760 |
| IV | $FeO + CO = Fe + CO_2$ | - | 17 128 |
| | $CO_2 + C = 2CO$ | + | 172 467 |
| | $FeO + C = Fe + CO$ | + | 155 339 |

Die nach I, III und IV ablaufenden Reaktionen erfordern Energiezufuhr und verbrauchen Kohlenstoff.

**Patentansprüche**

1. Verwendung eines Muffelofens zur Entzinkung von oxydischen zinkhältigen Eisenträgern, wie zum Beispiel Eisenerzen, Hüttenabfällen, insbesondere Hüttenstäuben, wobei der Eisenträger in stückiger Form mit einer Mindestkorngröße von 5 mm zusammen mit stückigen Reduktionsmitteln dem von außen beheizten Muffelofen aufgegeben wird und die Beschickung eine Vorwärm- und Vorreduktionszone sowie eine Reaktionszone zwischen dem Aufgabeende und dem Austragsende des Muffelofens durchläuft, wobei der Muffelofen an seinem Aufgabe- und seinem Austragsende gasdicht abschließbar ausgebildet ist, die Wandung des Muffelofens in einem zwischen diesen beiden Enden liegenden Bereich Gasaustrittsöffnungen aufweist, welche unter Umgehung oder Durchsetzung von am Muffelofen außen angebrachten Heizeinrichtungen münden, die Heizeinrichtung von wenigstens zwei den Muffelofen außen umgebenden in Achsrichtung des Muffelofens aufeinanderfolgenden Brennkammern gebildet ist und an die Gesaustrittsöffnungen des Muffelofens zwischen benachbarten Brennkammern angeordnete Leitungen angeschlossen sind und die Querschnittsebene, an welche die Gasaustrittsöffnungen anschließen, an eine Zone des Muffelofens angeschlossen ist, welche im Betrieb eine Temperatur von über 650 °C, vorzugsweise von 700 bis 900 °C aufweist.

2. Verwendung eines Muffelofens nach Anspruch 1, dadurch gekennzeichnet, daß die Querschnittsebene, in welcher die Reaktionsgase abgezogen werden, in einem Abstand vom Aufgabeende des Muffelofens angeordnet wird, in welchem die vollständige Umwandlung von $Fe_2O_3$ und $Fe_3O_4$ zu FeO sichergestellt ist.

3. Verwendung eines Muffelofens nach einem der Ansprüche 1 oder 2, dadurch gekennzeichnet, daß die Reaktionsgase aus einer Querschnittsebene des Muffelofens abgeführt werden, in welcher der Temperaturunterschied zwischen dieser Querschnittsebene und einer in Strömungsrichtung der Beschickung benachbarten Querschnittsebene geringer ist als zwischen unmittelbar vorangehenden äquidistanten Querschnittsebenen.

4. Verwendung eines Muffelofens nach einem der Ansprüche 1, 2 oder 3, dadurch gekennzeichnet, daß die Reaktionsgase mit Temperaturen von über 906 °C ausgebracht werden.

5. Verwendung eines Muffelofens nach einem der Ansprüche 1 bis 4, dadurch gekennzeichnet, daß die Beschickung in der Vorwärmzone auf die Reaktionstemperatur erwärmt wird und in der Folge über die gesamte axiale Länge der Reaktionszone auf der Reaktionstemperatur gehalten wird.

6. Verwendung eines Muffelofens nach Anspruch 5, dadurch gekennzeichnet, daß die Erwärmung in der Vorwärm- und Vorreduktionszone auf Temperaturen zwischen 900 und 1 100 °C erfolgt.

7. Verwendung eines Muffelofens nach einem der Ansprüche 1 bis 6, dadurch gekennzeichnet, daß das aus dem Muffelofen abgeführte Reaktionsgas gereinigt und einer Brennkammer, vorzugsweise der ersten Brennkammer, zugeführt wird.

8. Verwendung eines Muffelofens nach einem der Ansprüche 1 bis 7, dadurch gekennzeichnet, daß die dem Aufgabeende benachbarte Brennkammer (2) sich im wesentlichen über die axiale Länge der Vorwärm- und Vorreduktionszone (4) und vorzugsweise über etwa ein Drittel der axialen Länge des Muffelofens (1) erstreckt.

9. Verwendung eines Muffelofens nach einem der Ansprüche 1 bis 8, dadurch gekennzeichnet, daß wenigstens eine zweite Brennkammer (3) sich in axialer Richtung über die Reaktionszone (5) des Muffelofens (1) erstreckt und daß die Durchbrechungen (10) in der Wandung des Muffelofens (1) unmittelbar oberhalb der zweiten Brennkammer (3) angeordnet sind.

10. Verwendung eines Muffelofens nach einem der Ansprüche 1 bis 9, dadurch gekennzeichnet, daß in den Brennkammern (2, 3) in in Strömungsrichtung der Beschickung aufeinanderfolgenden Ebenen Brenner (26) angeordnet sind.

11. Verwendung eines Muffelofens nach Anspruch 10, dadurch gekennzeichnet, daß der Abstand der Brennerebenen voneinander, in Strömungsrichtung gesehen, größer wird.

12. Verwendung eines Muffelofens nach einem der Ansprüche 1 bis 11, dadurch gekennzeichnet, daß die Abgase aus der die Reaktionszone (5) umgebenden Brennkammer (3) der die Vorwärm- und Vorreduktionszone (4) umgebenden Brennkammer (2) über Leitungen zugeführt sind.

13. Verwendung eines Muffelofens nach einem der Ansprüche 1 bis 12, dadurch gekennzeichnet, daß die Gasaustrittsöffnungen (10) in den Muffelofen (1) umschließende Ringkammern münden, deren Kammerboden vorzugsweise nach außen abwärts geneigt ist.

14. Verwendung eines Muffelofens nach einem der Ansprüche 1 bis 13, dadurch gekennzeichnet, daß der Muffelofen (1) im Bereich der Gasaustrittsöffnungen (10) mit feuerfesten zinkbeständigen Steinen ausgekleidet ist.

15. Verwendung eines Muffelofens nach einem der Ansprüche 1 bis 14, dadurch gekennzeichnet, daß die Gasaustrittsöffnungen (10) in einem Abstand von 30 bis 50 % der axialen Länge des Muffelofens (1) gemessen vom Ausgabeende des Muffelofens (1) angeordnet sind.

16. Verwendung eines Muffelofens nach einem der Ansprüche 1 bis 15, dadurch gekennzeichnet, daß die Gasaustrittsöffnungen (10) über Leitungen (12) mit einer Reinigungseinrichtung (13) insbesondere einer Kühleinrichtung zum Kondensieren von gasförmigem Zink verbunden sind.

17. Verwendung eines Muffelofens nach Anspruch 16, dadurch gekennzeichnet, daß der Gasraum der Reinigungseinrichtung (13) über eine Leitung (15) mit den Brennern (26) einer Brennkammer (2, 3), vorzugsweise der dem Aufgabeende benachbarten Brennkammer (2) verbunden ist.

18. Verwendung eines Muffelofens nach einem der Ansprüche 1 bis 17, dadurch gekennzeichnet, daß der Muffelofen (1) von der Aufgabestelle ausgehend über einen ersten Teilbereich seiner axialen Länge trichterförmig divergierende Begrenzungswände (29) aufweist, und daß an diesen ersten Teilbereich zueinander parallele Wände (30) zur Begrenzung des Muffelofens (1) anschließen.

19. Verwendung eines Muffelofens nach Anspruch 18, dadurch gekennzeichnet, daß die axiale Länge des Teilbereiches des Muffelofens (1) mit divergierenden Begrenzungswänden (29) im wesentlichen der axialen Länge der Vorwärm- und Vorreduktionszone (4) entspricht, und daß die Gasaustrittsöffnungen (10) im Bereich des Überganges von divergierenden zu einander parallelen Begrenzungswänden (30) des Muffelofens (1) angeordnet sind.

**Claims**

1. Use of a muffle furnace for zinc removal from oxide-containing zinciferous iron sources such as, for example, iron ores, mill waste, in particular mill dust, comprising introducing the iron source in lumpy form having a minimum grain size of 5 mm together with lumpy reducing agents into the muffle furnace being heated exteriorly, the charge travelling, between the supply end and the discharge end of the muffle furnace, through a pre-heating and a pre-reduction zone as well as a reaction zone, the muffle furnace being adapted to be closed in a gas-tight manner at its supply and discharge ends, the wall of the muffle furnace being provided with gas outlet openings in a zone located between said ends of the muffle furnace, said gas outlet openings bypassing or passing through heating means externally mounted on the muffle furnace, said heating means being formed by at least two combustion chambers externally surrounding the muffle furnace and arranged one above the other in the axial direction thereof, conduits arranged between adjacent combustion chambers being connected to the gas outlet openings of the muffle furnace, and the cross-sectional plane of the gas outlet openings lying at a zone of the muffle furnace having a temperature of more than 650 °C, preferably 700 to 900 °C.

2. Use of a muffle furnace as claimed in claim 1, characterised in that the cross-sectional plane at which the reaction gases are withdrawn is at a distance from the supply end of the muffle furnace where complete conversion of $Fe_2O_3$ and $Fe_4O_4$ to FeO is warranted.

3. Use of a muffle furnace as claimed in claim 1 or 2, characterised in that the reaction gases are withdrawn from such a cross-sectional plane of the muffle furnace in which the temperature difference between this cross-sectional plane and a cross-sectional plane located adjacent as seen in flow direction of the charge is smaller than between immediately preceding equidistant cross-sectional planes.

4. Use of a muffle furnace as claimed in claim 1, 2 or 3, characterised in that the reaction gases are withdrawn at temperature exceeding 906 °C.

5. Use of a muffle furnace as claimed in any one of claims 1 to 4, characterised in that the charge is heated to reaction temperature in the pre-heating zone and is subsequently maintained over the whole axial length of the reaction zone at this reaction temperature.

6. Use of a muffle furnace as claimed in claim 5, characterised in that heating within the pre-heating and pre-reduction zone is effected up to temperatures within the range of 900 to 1 100 °C.

7. Use of a muffle furnace as claimed in any one of claims 1 to 6, characterised in that the reaction gas withdrawn from the muffle furnace is purified and supplied to a combustion chamber, preferably to the first combustion chamber.

8. Use of a muffle furnace as claimed in any one of claims 1 to 7, characterised in that the combustion chamber (2) located adjacent to the supply end extends substantially over the axial length of the pre-heating and pre-reduction zone (4) and preferably over approximately one third of the axial length of the muffle furnace (1).

9. Use of a muffle furnace as claimed in any one of claims 1 to 8, characterised in that at least a second combustion chamber (3) extends in axial direction over the reaction zone (5) of the muffle furnace (1) and that the openings (10) in the wall of the muffle furnace (1) are arranged immediately above the second combustion chamber (3).

10. Use of a muffle furnace as claimed in any one of claims 1 to 9, characterised in that burners (26) are arranged within the combustion chambers (2, 3) in successive planes as seen in flow direction of the charge.

11. Use of a muffle furnace as claimed in claim 10, characterised in that the distances between the burner planes increase as seen in flow direction.

12. Use of a muffle furnace as claimed in any one of claims 1 to 11, characterised in that the effluent gases from the combustion chamber (3) surrounding the reaction zone (5) are supplied into the combustion chamber (2) surrounding the pre-heating and pre-reduction zone (4) via conduits.

13. Use of a muffle furnace as claimed in any one of claims 1 to 12, characterised in that the gas outlet openings (10) open into annular chambers enclosing the muffle furnace (1), said annular chambers preferably having their bottom downwardly inclined in outward direction.

14. Use of a muffle furnace as claimed in any one of claims 1 to 13, characterised in that the muffle furnace (1) is lined with zinc-resistant refractory bricks at the area of the gas outlet openings (10).

15. Use of a muffle furnace as claimed in any one of claims 1 to 14, characterised in that the gas outlet openings (10) are arranged at a distance from the supply end of the muffle furnace (1) corresponding to 30 to 50 % of the axial length of the muffle furnace (1).

16. Use of a muffle furnace as claimed in any one of claims 1 to 15, characterised in that the gas outlet openings (10) are, via conduits (12), connected with a purifying means (13), in particular with a cooling means for condensing gaseous zinc.

17. Use of a muffle furnace as claimed in claim 16, characterised in that the gas-containing space of the purifying means (13) is, via a conduit (15), connected with the burners (26) of one combustion chamber (2, 3), preferably of the combustion chamber (2) located adjacent to the supply end.

18. Use of a muffle furnace as claimed in any one of claims 1 to 17, characterised in that the muffle furnace (1) has, starting from the supply end, limiting walls (29) diverging like a funnel over a first partial area of its axial length and that mutually parallel walls (30) limiting the muffle furnace (1) are adjoining that first partial area.

19. Use of a muffle furnace as claimed in claim 18, characterised in that the axial length of the partial area of the muffle furnace (1) provided with diverging limiting walls (29) essentially corresponds to the axial length of the pre-heating and pre-reduction zone (4) and that the gas outlet openings (10) are arranged at the area of transition between the diverging limiting walls and the mutually parallel walls (30) of the muffle furnace (1).

**Revendications**

1. Utilisation d'un four à moufle pour le dézingage de matériaux ferreux contenant des oxydes et du zinc comme par exemple minerais de fer, déchets sidérurgiques, en particulier poussières sidérurgiques, le matériau ferreux, en morceaux d'au moins 5 mm, étant chargé avec des réducteurs en morceaux dans le four à moufle chauffé de l'extérieur et la charge traversant entre l'extrémité de chargement et l'extrémité de sortie du four une zone de préchaufage et préréduction et une zone de réaction, le four pouvant être fermé de façon étanche aux gaz à son extrémité de chargement et son extrémité de sortie, la paroi du four présentant dans une région située entre ces deux extrémités des orifices de sortie de gaz qui débouchent en contournant ou traversant des dispositifs de chauffage montés extérieurement sur le four, le dispositif de chauffage étant formé d'au moins deux chambres de combustion entourant extérieurement le four et se suivant dans la direction axiale de celui-ci, des conduites placées entre les chambres de combustion voisines étant branchées aux orrifices de sortie de gaz du four, le plan de section transversale correspondant aux orifices de sortie de gaz étant adjacent à une zone du four à moufle qui a en service une température supérieure à 650 °C et, de préférence, de 700 à 900 °C.

2. Utilisation d'un four à moufle selon la revendication 1, caractérisée par le fait que le plan transversal dans lequel sont extraits les gaz de réaction est placé à une distance de l'extrémité de chargement du four sur laquelle la transformation complète de $Fe_2O_3$ et $Fe_3O_4$ en FeO est assurée.

3. Utilisation d'un four à moufle selon l'une des revendications 1 ou 2, caractérisée par le fait que les

gaz de réaction sont évacuées à partir d'un plan transversal du four tel que la différence de température entre ce plan transversal et un plan transversal voisin dans la direction d'écoulement de la charge est plus petite qu'entre des plans transversaux équidistants juste précédents.

4. Utilisation d'un four à moufle selon l'une quelconque des revendications 1 à 3, caractérisée par le fait que les gaz de réaction sont extraits à des températures supérieures à 906 °C.

5. Utilisation d'un four à moufle selon l'une quelconque des revendications 1 à 4, caractérisée par le fait que la charge est, dans la zone de préchauffage, portée à la température de réaction, et par la suite, sur toute la longueur axiale de la zone de réaction, maintenue à cette température de réaction.

6. Utilisation d'un four à moufle selon la revendication 5, caractérisée par le fait que le chauffage dans la zone de préchauffage et préréduction est fait à des températures comprises entre 900 et 1 100 °C.

7. Utilisation d'un four à moufle selon l'une quelconque des revendications 1 à 6, caractérisée par le fait que le gaz de réaction évacué du four à moufle est épuré et conduit à une chambre de combustion, de préférence à la première chambre de combustion.

8. Utilisation d'un four à moufle selon l'une quelconque des revendications 1 à 7, caractérisée par le fait que la chambre de combustion (2) voisine de l'extrémité de chargement s'étend sensiblement sur la longueur axiale de la zone de préchauffage et préréduction (4) et de préférence sur environ un tiers de la longueur axiale du four à moufle (1).

9. Utilisation d'un four à moufle selon l'une quelconque des revendications 1 à 8, caractérisée par le fait qu'au moins une deuxième chambre de combustion (3) s'étend dans la direction axiale sur la zone de réaction (5) du four à moufle (1) et que les ouvertures (10) faites dans la paroi du four à moufle (1) sont juste au-dessus de la deuxième chambre de combustion (3).

10. Utilisation d'un four à moufle selon l'une quelconque des revendications 1 à 9, caractérisée par le fait que des brûleurs (26) sont placés dans les chambres de combustion (2, 3) dans des plans se suivant dans la direction d'écoulement de la charge.

11. Utilisation d'un four à moufle selon la revendication 10, caractérisée par le fait que l'espacement des plans des brûleurs augmente dans le sens d'écoulement de la charge.

12. Utilisation d'un four à moufle selon l'une quelconque des revendications 1 à 11, caractérisée par le fait que les fumées sortant de la chambre de combustion (3) qui entoure la zone de réaction (5) sont envoyées par des conduites à la chambre de combustion (2) qui entoure la zone de préchauffage et de préréduction (4).

13. Utilisation d'un four à moufle selon l'une quelconque des revendications 1 à 12, caractérisée par le fait que les orifices de sortie de gaz (10) débouchent dans des chambres annulaires entourant le four à moufle (1), le fond de ces chambres étant, de préférence, incliné vers le bas vers l'extérieur.

14. Utilisation d'un four à moufle selon l'une quelconque des revendications 1 à 13, caractérisée par le fait que le four à moufle (1) est, dans la région des orifices de sortie de gaz (10), revêtu de briques réfractaires résistant au zinc.

15. Utilisation d'un four à moufle selon l'une quelconque des revendications 1 à 14, caractérisée par le fait que les orifices de sortie de gaz (10) sont à une distance de l'extrémité de chargement du four à moufle (1) comprise entre 30 et 50 % de la longueur axiale du four à moufle (1).

16. Utilisation d'un four à moufle selon l'une quelconque des revendications 1 à 15, caractérisée par le fait que les orifices de sortie de gaz (10) sont reliés par des conduites (12) à un dispositif d'épuration (13), en particulier à un dispositif de refroidissement pour la condensation du zinc gazeux.

17. Utilisation d'un four à moufle selon la revendication 16, caractérisée par le fait que l'espace à gaz du dispositif d'épuration (13) est relié par une conduite (15) aux brûleurs (26) d'une chambre de combustion (2, 3), de préférence de la chambre de combustion (2) voisine de l'extrémité de chargement.

18. Utilisation d'un four à moufle selon l'une quelconque des revendications 1 à 17, caractérisée par le fait que le four à moufle (1) présente, sur une première partie de sa longueur axiale partant de l'emplacement de chargement, des parois (29) qui divergent en entonnoir, et qu'à cette première partie font suite des parois parallèles (30) qui délimitent ledit four à moufle (1).

19. Utilisation d'un four à moufle selon la revendication 18, caractérisée par le fait que la longueur axiale de la partie du four à moufle (1) à parois divergentes (29) correspond sensiblement à la longueur axiale de la zone de préchauffage et préréduction (4), et que les orifices de sortie de gaz (10) sont dans la zone de jonction des parois divergentes aux parois parallèles (30) du four à moufle (1).

FIG. 1

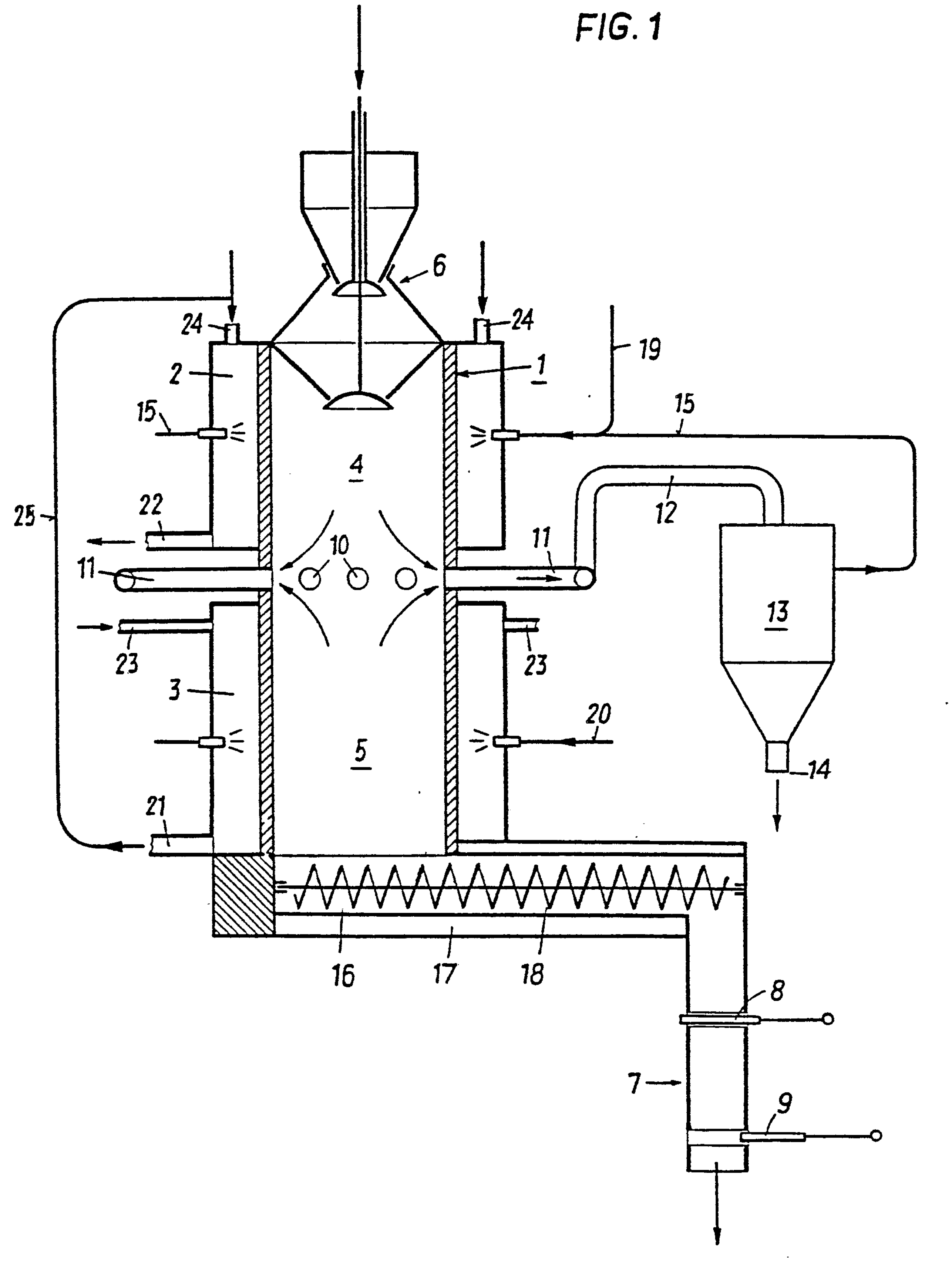

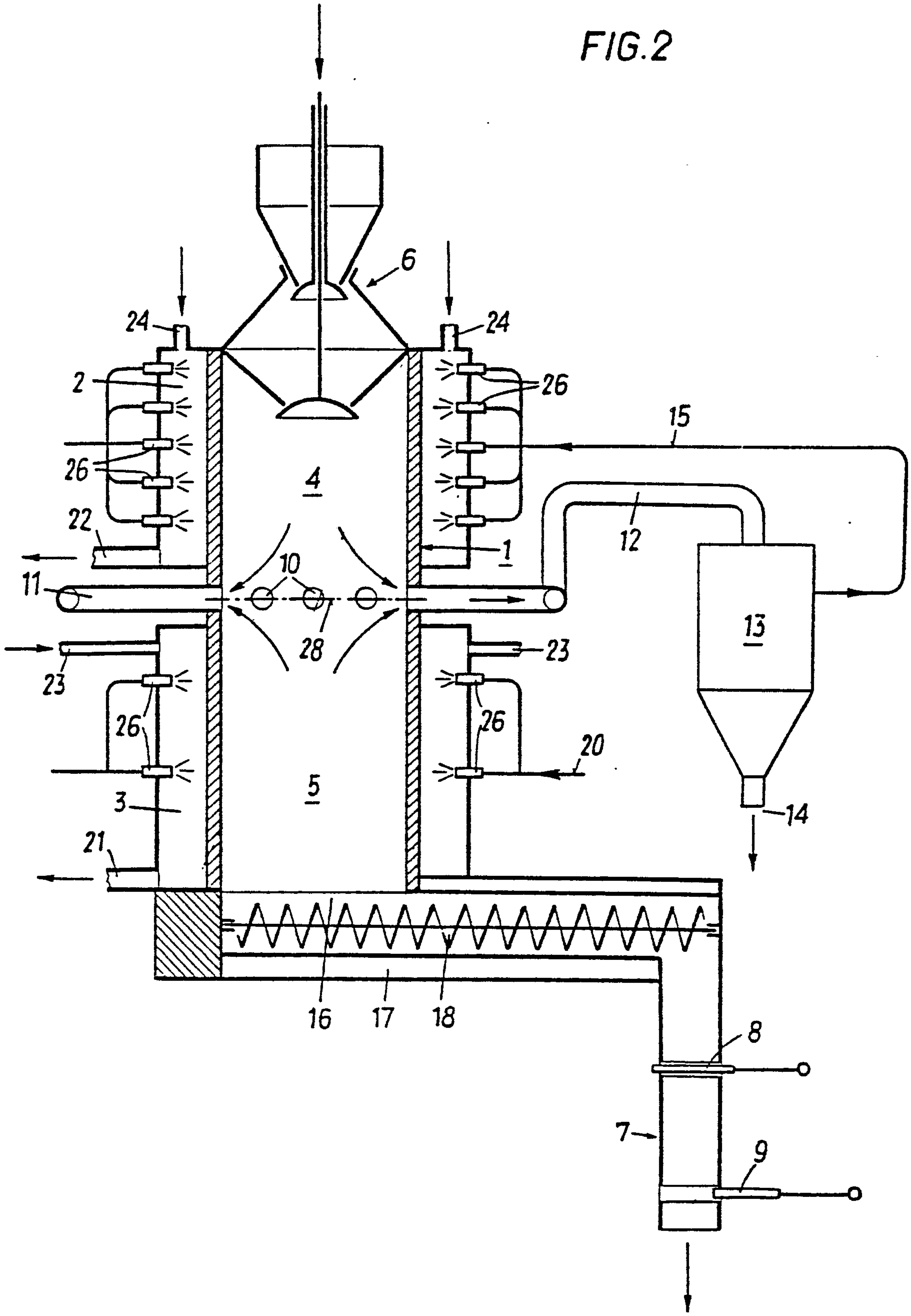
1
2
3
4
5
6
7
8
9
10
11
12
13
14
15
16
17
18
20
21
22
23
23
23
24
24
26
26
26
26
26
28

FIG.2

FIG.3

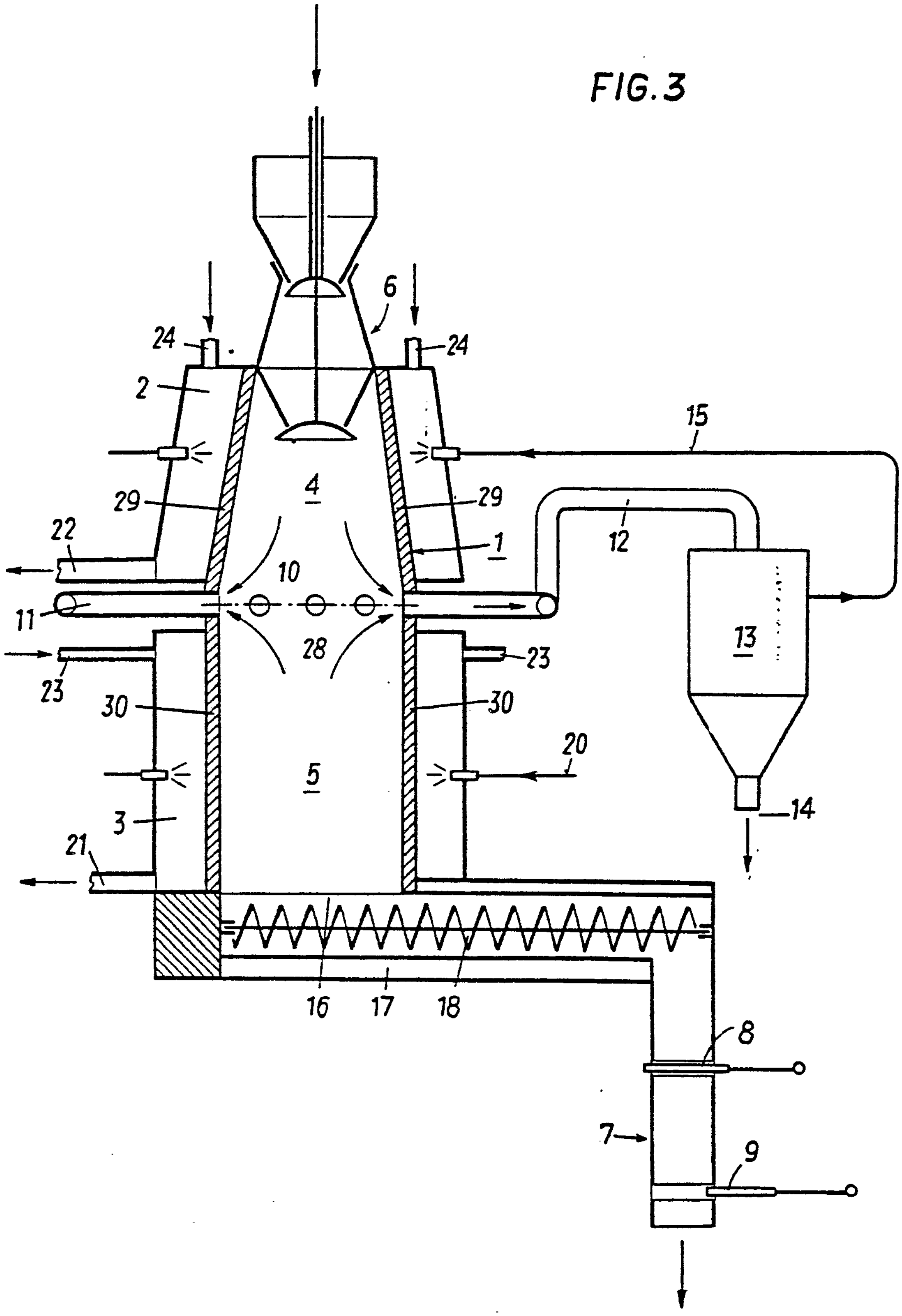
6
24
24
2
15
4
29
29
12
22
1
10
11
13
28
23
23
30
30
20
5
14
3
21
16
17
18
8
7
9